Europäisches Patentamt

European Patent Office

Office européen des brevets

(11) Veröffentlichungsnummer: **0 341 590 B1**

# (12) EUROPÄISCHE PATENTSCHRIFT

(45) Veröffentlichungstag der Patentschrift:
09.10.91 Patentblatt 91/41

(51) Int. Cl.⁵: **B60T 8/88**

(21) Anmeldenummer: 89108112.7

(22) Anmeldetag: 05.05.89

(54) Verfahren zum Überwachen der Funktionstüchtigkeit von Drehzahlsensoren.

(30) Priorität: 10.05.88 DE 3816039

(43) Veröffentlichungstag der Anmeldung:
15.11.89 Patentblatt 89/46

(45) Bekanntmachung des Hinweises auf die
Patenterteilung:
09.10.91 Patentblatt 91/41

(84) Benannte Vertragsstaaten:
DE ES FR GB IT

(56) Entgegenhaltungen:
FR-A- 2 423 384
US-A- 4 013 324
US-A- 4 521 856

(73) Patentinhaber: LUCAS INDUSTRIES public
limited company
Great King Street
Birmingham, B19 2XF West Midlands (GB)

(72) Erfinder: Schmitt, Hubert
Mohlenweg 40
W-5405 Ochtendung (DE)
Erfinder: Braschel, Volker
Fliedergarten 57
W-5450 Neuwied (DE)
Erfinder: Roller, Dieter
Höhenstrasse 14
W-5450 Neuwied 12 (DE)

(74) Vertreter: von Hellfeld, Axel, Dr. Dipl.-Phys., et
al
WUESTHOFF & WUESTHOFF
Schweigerstrasse 2
W-8000 München 90 (DE)

## Beschreibung

Die Erfindung betrifft ein Verfahren zum Überwachen der Funktionsuntüchtigkeit von die Drehgeschwindigkeiten der Räder eines blockiergeschützt bremsbaren Fahrzeuges messenden Drehzahlsensoren.

Blockiergeschützte Fahrzeugbremsanlagen (ABS-Bremsen) erfordern funktionierende Drehzahlsensoren zum Messen der Drehgeschwindigkeiten der Fahrzeugräder als notwendige Voraussetzung für die Funktion der ABS-Regelung.

Ein Drehzahlsensor kann aufgrund unterschiedlicher Ursachen defekt werden. Denkbar sind insbesondere ein Kurzschluß im Sensor, eine Unterbrechung der Zuleitungen zum Sensor, ein nach einem Werkstattbesuch fehlender Sensor oder ein fehlender Zahnkranz, eine fehlerhafte Signalaufbereitung vor dem Einspeisen in den Rechner der ABS-Anlage oder auch ein sich im Laufe der Zeit ändernder Abstand zwischen der Spule und dem Zahnkranz des Sensors.

Aufbau und Wirkungsweise der heute verwendeten Drehzahlsensoren sind dem Fachman bekannt. Üblicherweise arbeiten Drehzahlsensoren gemäß dem Prinzip der elektromagnetischen Induktion. Mit dem Rad dreht ein Zahnkranz, der den magnetischen Fluß an einer Spule zeitabhängig ändert, so daß in der Spule eine Wechselspannung induziert wird, deren Frequenz und Amplitude der Drehzahl des Rades proportional sind. Bei nicht drehendem Rad wird kein Signal im Drehzahlsensor induziert. Auch bei nur sehr langsam drehendem Rad kann die Amplitude des elektromagnetisch induzierten Signales zu klein sein, um eine auswertbare Information über die Drehzahl zu liefern.

Aus der US-A 4013324 ist ein Verfahren zum Überwachen der Funktionstüchtigkeit von die Drehgeschwindigkeiten der Räder eines blockiergeschützt bremsbaren Fahrzeuges messenden Drehzahlsensoren bekannt, wobei jeweils die größte Drehzahl und die kleinste Drehzahl ausgewählt und verglichen werden. Überschreitet die Differenz der verglichenen Drehzahlen einen vorgegebenen Wert, so wird dies als Hinweis auf einen Defekt ausgewertet.

Die Erfindung beschäftigt sich insbesondere mit Problemen der Drehzahlsensor-Überwachung, die beim Anfahren eines Fahrzeuges aus dem Stillstand auftreten können. Erfolgt der Anfahrvorgang nämlich auf einem Boden mit unterschiedlichen Haftbeiwerten für die einzelnen Räder, also zum Beispiel im Winter auf einer Fahrbahn, die teilweise vereist ist, so ist es denkbar, daß eines der Räder nicht dreht (also keine Drehzahlsignale liefert), während zumindest ein anderes Rad durchdreht (also positive Drehzahlsignale liefert). Um in einem solchen Fall einer Fehlanzeige oder gar einer Abschaltung der ABS-Regelung zu begegnen, kann die obige Zeitspanne $t_{ges}$ relativ lang eingestellt werden. Diese Lösung ist jedoch insofern verbesserungsfähig, als ein tatsächlich vorhandener Defekt eines Drehzahlsensors erst nach Ablauf der vorgegebenen, relativ langen Zeitspanne erkannt werden kann.

Um dem oben beschriebenen Zustand beim Anfahren auf einer Fahrbahn mit unterschiedlichen Haftbeiwerten (z.B. teilweise vereiste Fahrbahn) zu begegnen, wäre es denkbar, ein Durchdrehen zumindest eines Rades zu ermitteln. Ein solches Durchdrehen beim Anfahren eines Fahrzeuges läßt sich relativ leicht dann feststellen, wenn das Rad so stark durchdreht, daß seine Drehbeschleunigung größer ist als die maximal physikalisch mögliche Fahrzeugbeschleunigung, also diejenige Beschleunigung, die bei optimalen Reifen- und Fahrbahnverhältnissen mit dem Fahrzeug überhaupt durchführbar ist. Für einen typischen PkW kann die maximal physikalisch mögliche Fahrzeugbeschleunigung z.B. bei 0,6 g liegen. Der Prozessor der ABS-Regelanlage ist also ohne weiteres in der Lage, ein Durchdrehen eines Rades zu erkennen, soweit es oberhalb der physikalisch möglichen Drehbeschleunigung liegt. Für die Überwachung von Drehzahlsensoren könnte man diese Erkenntis so ausnutzen, daß dann, wenn ein derartiges Durchdrehen eines Rades erkannt wird, fehlende Signale eines Drehzahlsensors bezüglich eines anderen Rades ignoriert werden, da das betreffende Rad möglicherweise nur eine bessere Bodenhaftung aufweist als das durchdrehende Rad und sein Drehzahlsensor in Wirklichkeit nicht defekt ist.

Aber auch diese Lösung ist noch weiter verbesserungsfähig im Hinblick auf bestimmte Fahrsituationen. Treten nämlich beim Anfahren auf einer Fahrbahn mit unterschiedlichen Reibwerten keine Rad-Drehbeschleunigungen auf, die größer sind als die maximal mögliche Fahrzeugbeschleunigung, obwohl eines der Räder durchdreht, so würde das vorstehend skizzierte Verfahren keine optimalen Ergebisse liefern. Auch können auf homogener Fahrbahn kurzzeitig bei besonders "forscher" Fahrweise (sogenannter "Kavalierstart") sehr hohe Radbeschleunigungen auftreten. In einem solchen Fall wäre die Zeitspanne, in der ein tatsächlich vorhandener Sensorfehler erkannt wird, unnötig verlängert. Dies wäre insofern von Nachteil, als bei Auftreten eines Sensorfehlers die ABS-Regelanlage außer Funktion gesetzt und die Bremsung auf eine "normale", allein durch die Pedalbetätigung betimmte Bremse umgestellt wird.

Eine besondere Ausgestaltung der Erfindung stellt sich deshalb die Aufgabe, ein Verfahren zum Überwachen der Funktionstüchtigkeit von in einer blockiergeschützten Fahrzeug-Bremsanlage verwendeten Drehzahlsensoren zu schaffen, welches auch unter unterschiedlichen Fahrsituationen eine möglichst schnelle Ermittlung eines Sensorfehlers ermöglicht.

Dabei wird vorausgesetzt, daß die überwachten Drehzahlsensoren an angetriebenen Rädern des Fahrzeuges angeordnet sind.

In einer ersten erfindungsgemäßen Lösung dieser Aufgabe ist vorgesehen, daß dann auf die Funktionsuntüchtigkeit eines Drehzahlsensors erkannt wird, wenn dieser Sensor im Unterschied zu zumindest einem anderen Sensor während einer vorgegebenen Zeitspanne keine Drehzahlsignale liefert, wobei die vorgegebene Zeitspanne in Abhängigkeit von der Drehgeschwindigkeit eines Rades, insbesondere des am langsamsten drehenden Rades (welches überhaupt Drehzahlsignale liefert) derart eingestellt wird, daß mit zunehmender Drehgeschwindigkeit die Zeitspanne verkürzt wird. Es versteht sich, daß diese Einstellung der Zeitspanne innerhalb von Grenzwerten erfolgt, also die Zeitspanne nicht beliebig kurz und auch nicht beliebig lang wird.

In einer weiteren erfindungsgemäßen Lösung ist vorgesehen, daß die vorgegebene Zeitspanne ($t_{ges}$) in Abhängigkeit von der Drehgeschwindigkeit ($v_{rad}$) eines Rades, insbesondere des am schnellsten drehenden Rades derart eingestellt wird, daß die Geschwindigkeitsdifferenz ($\Delta v$) bestimmt wird, die dieses Rad zwischem dem Überschreiten einer Beschleunigungsschwelle (S) und einem anschließenden Unterschreiten dieser Schwelle durchläuft, und daß mit Zunahme dieser Geschwindigkeitsdifferenz ($\Delta v$) die vorgebene Zeitspanne ($t_{ges}$) verlängert wird. Auch die in dieser Weise vorgegebene Zeitspanne wird zwischen einem maximalen und einem minimalen Wert variiert.

Die beiden vorstehend genannten Verfahren zum Einstellen der vorgegebenen Zeitspanne werden in einer besonders bevorzugten Ausgestaltung der Erfindung miteinander kombiniert. Hierzu setzt sich die vorgegebene Zeitspanne aus einem Anteil zusammen, der durch die Drehgeschwindigkeit des am langsamsten drehenden Rades bestimmt ist, sowie einem Anteil, der durch die genannte Geschwindigkeitsdifferenz bestimmt ist. Die geteilten Anteile können multiplikativ oder bevorzugt additiv überlagert werden.

Nachfolgend wird ein Ausführungsbeispiel der Erfindung anhand der Zeichnung näher erläutert. Es zeigt:

Fig. 1    die Abhängigkeit der die Filter-Zeitspanne $t_{ges}$ bestimmenden Zeitspanne $t_a$ von der Geschwindigkeit des sich am langsamsten drehenden Rades des Fahrzeuges ;

Fig. 2    die Abhängigkeit der die Filter-Zeitspanne $t_{ges}$ bestimmenden Zeitspanne $t_b$ von der Geschwindigkeitsdifferenz des sich am schnellsten drehenden Rades zwischen zwei Durchgängen durch eine Beschleunigungsschwelle ; und

Fig. 3    schematisch die Ermittlung der Geschwindigkeitsdifferenz gemäß Fig. 2.

Die bei Ausführung der Erfindung verwendeten Drehzahlsensoren sind als solche dem Fachmann bekannt und brauchen hier nicht näher erläutert zu werden. Auch die Mittel zur Übertragung und Verarbeitung der Sensorsignale sind bekannt. Zur erfindungsgemäßen Verarbeitung der Sensorsignale zur Überwachung der Funktionstüchtigkeit der Sensoren dient ein Prozessor, der auch die ABS-Regelung durchführt.

Wie oben erläutert, erkennt der Prozessor dann auf Funktionsuntüchtigkeit eines Drehzahlsensors und setzt entsprechend die ABS-Regelung außer Kraft, wenn der Sensor über eine bestimmte, vorgegebene Zeitspanne $t_{ges}$ keine Drehzahlsignale liefert während zumindest ein anderer Sensor eine Raddrehung anzeigt. Die Zeitspanne $t_{ges}$ kann somit auch als Filter-Zeitspanne bezeichnet werden, da fehlende Drehzahlsignale des Detektors für die Funktionstüchtigkeitsprüfung ohne Wirkung bleiben und erst dann aus ihnen auf eine Funktionsuntüchtigkeit geschlossen wird, wenn sie auch nach Ablauf der Zeitspanne $t_{ges}$ noch fehlen.

Die Bemessung der Filter-Zeitspanne $t_{ges}$ unterliegt, wie oben bereits erläutert, einem Zielkonflikt. Einerseits sollte die Zeitspanne $t_{ges}$ möglichst kurz sein, damit ein tatsächlich vorhandener Detektorfehler möglichst schnell erkannt werden und entsprechend die ABS-Regelanlage außer Funktion und durch eine "normale" Bremsung ersetzt werden kann. Andererseits soll die Filter-Zeitspanne aber möglichst lang sein, um ein fälschliches Erkennen auf Sensorfehler, beispielsweise bedingt durch durchdrehende Räder, zu vermeiden.

Beim nachfolgend beschriebenen Ausführungsbeispiel der Erfindung werden diese beiden widersprüchlichen Anforderungen in Abhängigkeit von der gegebenen Fahrsituation optimal in Einklang gebracht.

Die Filter-Zeitspanne $t_{ges}$ wird variabel in Abhängigkeit von zwei Parametern eingestellt.

Zum einen wird von den Rädern des Fahrzeuges (im allgemeinen vier Räder) dasjenige ermittelt, das sich am langsamsten dreht, d.h. es wird die Drehgeschwindigkeit $v_{rad}$ desjenigen Rades betrachtet, dessen Drehzahlsensor die geringste Drehgeschwindigkeit anzeigt, wobei ein Rad, dessen Drehzahlsensor keine Signale liefert, also die Drehgeschwindigkeit Null anzeigt, nicht als "das am langsamsten drehende Rad" betrachtet wird.

Zum anderen wird auch das sich am schnellsten drehende Rad des Fahrzeuges betrachtet und mit in die Bildung der Filter-Zeitspanne $t_{ges}$ einbezogen.

Die gesamte Filter-Zeitspanne $t_{ges}$ setzt sich additiv aus zwei Anteilen zusammen, die zum einen durch die Geschwindigkeit des sich am langsamsten drehenden Rades und zum anderen durch eine noch weiter unten näher beschriebene Geschwindigkeitsdifferenz des am schnellsten drehenden Rades bestimmt sind :

$$t_{ges} = t_a + t_b$$

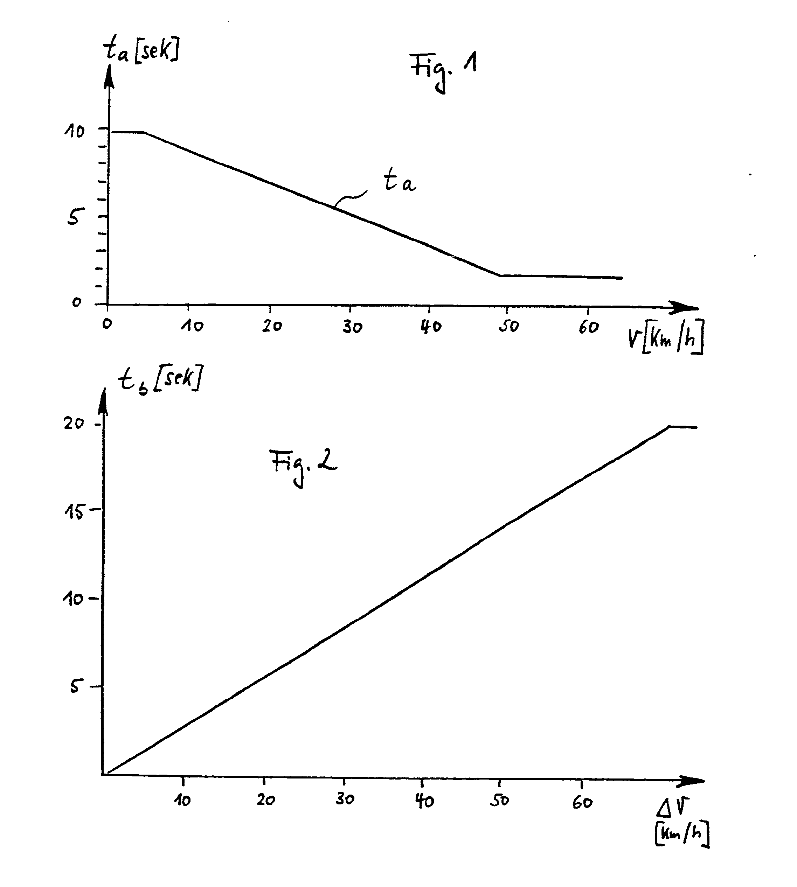

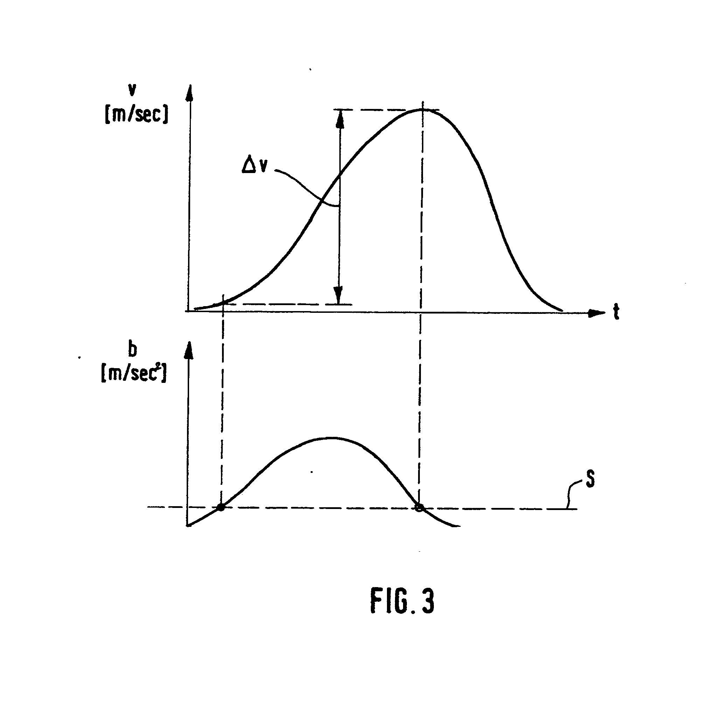

Der Anteil $t_a$ ist abhängig von der Geschwindigkeit des sich am langsamsten drehenden Rades, also desjenigen Rades, dessen Drehzahlsensor tatsächlich Geschwindigkeitssignale liefert, die allerdings eine geringere Drehgeschwindigkeit anzeigen als der Sensor zumindest eines anderen Rades. Fig. 1 beschreibt schematisch die umgekehrte Proportionalität dieser Abhängigkeit, die beim dargestellten Ausführungsbeispiel linear ist. Statt der linearen Funktion können auch andere Abhängigkeiten gewählt werden. Wesentlich ist, daß der Anteil $t_a$ der Zeitspanne mit zunehmender Drehgeschwindigkeit $v_{rad}$ des am langsamsten drehenden Rades abnimmt, wobei $t_a$ zwischen einem maximalen Grenzwert (in Fig. 1 zirka 10 Sekunden) bei kleinsten Drehgeschwindigkeiten und einem minimalen Grenzwert (in Fig. 1 zirka 2 Sekunden) bei Drehgeschwindigkeiten oberhalb von 50 km/h variiert. Der Zeitanteil $t_b$ ist abhängig von der Geschwindigkeitsänderung $\Delta v$, die das sich am schnellsten drehende Rad zwischen zwei Durchgängen durch eine Radbeschleunigungsschwelle S gemäß Fig. 3 erfährt. Fig. 3 zeigt über einer gemeinsamen Zeitskala den Verlauf der Drehgeschwindigkeit des Rades (oben) und den Verlauf der Drehbeschleunigung des Rades (unten). Die Radbeschleunigung überschreitet den Schwellenwert S und fällt danach wieder unter diesen Schwellenwert ab. Zwischen diesen beiden Zeitpunkten wird die größte Geschwindigkeitsdifferenz ermittelt. Mit anderen Worten : Es wird ermittelt, wann das am schnellsten drehende Rad eine vorgegebene Radbeschleunigungsschwelle S überschreitet und die zu diesem Zeitpunkt herrschende Drehgeschwindigkeit v wird mit einem Maximalwert verglichen, der vor dem anschließenden Unterschreiten der Schwelle S auftritt, um die Geschwindigkeitsdifferenz $\Delta v$ zu bilden, welche in Fig. 2 als Abszisse aufgetragen ist. Der Zeitanteil $t_b$ ergibt sich beim in Fig. 2 dargestellten Ausführungsbeispiel in linearer Abhängigkeit von der Geschwindigkeitsdifferenz $\Delta v$ bis zu einem Maximalwert bei $\Delta v = 70$ km/h von etwa 20 Sekunden.

Mit Hilfe der auf diese Weise definierten Filter-Zeitspanne $t_{ges}$ wird nun ein Defekt eines Drehzahlsensors wie folgt ermittelt.

Liefert ein Drehzahlsensor (oder auch mehrere Drehzahlsensoren) keine Geschwindigkeitssignale, so wird die Zeitspanne, bis zum Auftreten eines ersten Geschwindigkeitssignals kontinuierlich gemessen und mit der wie vorstehend beschrieben vorgegebenen Filter-Zeitspanne $t_{ges}$ verglichen. Liefert der betreffende Drehzahlsensor während der gesamten Filter-Zeitspanne $t_{ges}$ keine Drehgeschwindigkeitssignale, so wird auf einen Defekt des betreffenden Drehzahlsensors erkannt.

Der oben beschriebenen Ermittlung der Filter-Zeitspanne $t_{ges}$ aus den beiden Anteilen $t_a$ und $t_b$ liegen folgenden Überlegungen zugrunde. Liegt ein tatsächlicher Defekt eines Drehzahlsensors vor, so wird der Fehler bei höheren Fahrzeuggeschwindigkeiten, also einem gefährlicheren Fahrzeugzustand, schneller erkannt als bei geringen Fahrzeuggeschwindigkeiten gemäß der ungekehrt proportionalen Abhängigkeit des Zeitanteils $t_a$ von der Drehgeschwindigkeit des sich am langsamsten drehenden Rades entsprechend Fig. 1.

Bei Fahrbahnen mit guten Haftbeiwerten, bei denen ein Fahrzeug schnell hohe Geschwindigkeiten erreichen kann, wird bei kurzzeitigem Durchdrehen eines Rades keine große Geschwindigkeitsdifferenz $\Delta v$ gemäß Fig. 2 erreicht und deshalb die Filter-Zeitspanne $t_{ges}$ nicht unerwünscht verlängert.

Bei einem Anfahren aus dem Stillstand auf einer Fahrbahn mit unterschiedlichen Haftbeiwerten, also einer z.B. teilweise vereisten Fahrbahn, wird der Zeitanteil $t_a$ groß sein, wenn die Räder vorsichtig auf geringe Geschwindigkeiten unterhalb der Beschleunigungsschwelle S beschleunigt werden. Gibt der Fahrer jedoch stark Gas und werden beim Anfahrversuch hohe Endgeschwindigkeiten der Räder erreicht, so wird $t_a$ klein sein, während jedoch $t_b$ relativ hohe Werte annimmt, da mit hoher Wahrscheinlichkeit die Beschleunigungsschwelle überschritten wird. Entsprechend wird die Filter-Zeitspanne $t_{ges}$ relativ lang aufgrund des großen Summanden $t_b$. Ein fälschliches Anzeigen eines funktionsuntüchtigen Drehzahlsensors wird deshalb weitgehend vermieden.

Zusätzlich ist es noch möglich, die Zeitspanne $t_{ges}$ dann zu verlängern, wenn erkannt wird, daß zumindest ein Rad des Fahrzeuges durchdreht. Ein Durchdrehen des Rades ist dann eindeutig feststellbar, wenn seine Beschleunigung größer ist als die physikalisch maximal mögliche. Bei einer Fahrzeuggeschwindigkeit, welche im Prozessor der ABS-Anlage laufend als Referenzgeschwindigkeit ermittelt wird, unterhalb von 30 km/h ist ein Durchdrehen der Räder bei einem typischen Mittelklasse-PkW dann gegeben, wenn die Drehbeschleunigung größer ist als 0,4 g. Bei Fahrzeuggeschwindigkeiten zwischen 30 und 60 km/h liegt ein Durchdrehen bei Drehbeschleunigungen oberhalb 0,3 g und bei Geschwindigkeiten oberhalb von 50 km/h bei Drehbeschleunigungen oberhalb 0,2 g vor.

## EP 0 341 590 B1

### Patentansprüche

1. Verfahren zum Überwachen der Funktionstüchtigkeit von die Drehgeschwindigkeiten der Räder eines blockiergeschützt bremsbaren Fahrzeuges messenden Drehzahlsensoren, dadurch **gekennzeichnet**, daß dann auf Funktionsuntüchtigkeit eines Drehzahlsensors erkannt wird, wenn dieser Sensor im Unterschied zu zumindest einem anderen Sensor während einer vorgegebenen Zeitspanne ($t_{ges}$) keine Drehzahlsignale liefert, wobei die vorgegebene Zeitspanne ($t_{ges}$) in Abhängigkeit von der Drehgeschwindigkeit ($v_{rad}$) eines Rades derart eingestellt wird, daß mit zunehmender Drehgeschwindigkeit die Zeitspanne ($t_{ges}$) verkürzt wird.

2. Verfahren nach Anspruch 1, dadurch **gekennzeichnet**, daß die vorgegebene Zeitspanne ($t_{ges}$) in Abhängigkeit von der Drehgeschwindigkeit ($v_{rad}$) des am langsamsten drehenden Rades eingestellt wird.

3. Verfahren zum Überwachen der Funktionstüchtigkeit von die Drehgeschwindigkeiten der Räder eines blockiergeschützt bremsbaren Fahrzeuges messenden Drehzahlsensoren, dadurch **gekennzeichnet**, daß dann auf Funktionsuntüchtigkeit eines Drehzahlsensors erkannt wird, wenn dieser Sensor im Unterschied zu zumindest einem anderen Sensor während einer vorgegebenen Zeitspanne ($t_{ges}$) keine Drehzahlsignale liefert, wobei die vorgegebene Zeitspanne ($t_{ges}$) in Abhängigkeit von der Drehgeschwindigkeit ($v_{rad}$) eines Rades derart eingestellt wird, daß die Geschwindigkeitsdifferenz ($\Delta v$) bestimmt wird, die dieses Rad zwischem dem Überschreiten einer Beschleunigungsschwelle (S) und einem anschließenden Unterschreiten dieser Schwelle durchläuft, und daß mit Zunahme dieser Geschwindigkeitsdifferenz ($\Delta v$) die vorgebene Zeitspanne ($t_{ges}$) verlängert wird.

4. Verfahren nach Anspruch 3, dadurch **gekennzeichnet**, daß die vorgegebene Zeitspanne ($t_{ges}$) in Abhängigkeit von der Drehgeschwindigkeit ($v_{rad}$) des am schnellsten drehenden Rades eingestellt wird.

5. Verfahren nach einem der Ansprüche 1 oder 3, dadurch **gekennzeichnet**, daß sich die vorgegebene Zeitspanne ($t_{ges}$) zusammensetzt aus einem Anteil ($t_a$) der durch die Drehgeschwindigkeit des am langsamsten drehenden Rades bestimmt ist, und einem Anteil ($t_b$) der durch die genannte Geschwindigkeitsdifferenz ($\Delta v$) bestimmt ist.

### Claims

1. Method for monitoring the functionability of rotational speed sensors measuring the rotational velocities of the wheels of an antilock-brakable vehicle, characterized in that a rotational speed sensor is detected as unfunctionable when said sensor in contrast to at least one other sensor during a predetermined period of time ($t_{ges}$) does not furnish any rotational speed signals, the predetermined period of time ($t_{ges}$) being set in dependence upon the rotational velocity ($v_{rad}$) of a wheel in such a manner that with increasing rotational velocity the period of time ($t_{ges}$) is shortened.

2. Method according to claim 1, characterized in that the predetermined period ($t_{ges}$) is set in dependence upon the rotational velocity ($v_{rad}$) of the slowest rotating wheel.

3. Method for monitoring the functionability of rotational speed sensors measuring the rotational velocities of the wheels of an antilock-brakable vehicle, characterized in that a rotational speed sensor is detected as unfunctionable when said sensor in contrast to at least one other sensor during a predetermined period of time ($t_{ges}$) does not furnish any rotational speed signals, the predetermined period of time ($t_{ges}$) being set in dependence upon the rotational velocity ($v_{rad}$) of a wheel in such a manner that the velocity difference ($\Delta v$) which said wheel undergoes between exceeding an acceleration threshold (S) and subsequently dropping below said threshold is determined, and that on increase of said velocity difference ($\Delta v$) the predetermined period of time ($t_{ges}$) is lengthened.

4. Method according to claim 3, characterized in that the predetermined period of time ($t_{ges}$) is set in dependence upon the rotational velocity ($v_{rad}$) of the fastest rotating wheel.

5. Method according to any one of claims 1 or 3, characterized in that the predetermined period of time ($t_{ges}$) is made up of a component ($t_a$) which is governed by the rotational velocity of the slowest rotating wheel and a component ($t_b$) which is governed by said velocity difference ($\Delta v$).

### Revendications

1. Procédé pour surveiller le bon fonctionnement de capteurs de régime qui mesurent les vitesses de rotation des roues d'un véhicule pouvant être freiné avec antiblocage, **caractérisé** en ce qu'on décèle le mauvais fonctionnement d'un capteur de régime à la suite du fait qu'à la différence d'au moins un autre capteur, ce capteur ne fournit pas de signaux de régime pendant un intervalle de temps alloué ($t_{ges}$), l'intervalle de temps alloué

5

($t_{ges}$) étant réglé en fonction de la vitesse de rotation ($v_{rad}$) d'une roue de façon à être réduit tandis que la vitesse de rotation augmente.

2. Procédé selon la revendication 1, caractérisé en ce que l'intervalle de temps alloué ($t_{ges}$) est réglé en fonction de la vitesse de rotation ($v_{rad}$) de la roue tournant le plus lentement.

3. Procédé pour surveiller le bon fonctionnement de capteurs de régime qui mesurent les vitesses de rotation des roues d'un véhicule pouvant être freiné avec antiblocage, **caractérisé** en ce qu'on décèle le mauvais fonctionnement d'un capteur de régime à la suite du fait qu'à la différence d'au moins un autre capteur, ce capteur ne fournit pas de signaux de régime pendant un intervalle de temps alloué ($t_{ges}$), l'intervalle de temps alloué ($t_{ges}$) étant réglé en fonction de la vitesse de rotation ($v_{rad}$) d'une roue en déterminant la différence de vitesse ($\Delta v$) que connaît cette roue entre le franchissement d'un seuil d'accélération (S) par excès et un franchissement consécutif de ce seuil, par défaut, l'intervalle de temps alloué ($t_{ges}$) étant augmenté tandis que cette différence de vitesse ($\Delta v$) augmente.

4. Procédé selon la revendication 3, caractérisé en ce que l'intervalle de temps alloué ($t_{ges}$) est réglé en fonction de la vitesse de rotation ($v_{rad}$) de la roue tournant le plus vite.

5. Procédé selon la revendication 1 ou 3, caractérisé en ce que l'intervalle de temps alloué ($t_{ges}$) se compose d'une partie (ta) qui est déterminée par la vitesse de rotation de la roue tournant le plus lentement, et d'une partie (tb) qui est déterminée par la différence de vitesse précitée ($\Delta v$).

Fig. 1

Fig. 2

FIG. 3